# EUROPÄISCHE PATENTANMELDUNG

(11) **EP 1 612 028 A1**
(43) Veröffentlichungstag der Anmeldung: **04.01.2006**
(21) Anmeldenummer: 05013702.5
(22) Anmeldetag: 25.06.2005
(51) Int. Cl.: B29C 45/82, F15B 1/02, F15B 1/16

(54) **Spritzgiessmaschine mit einem Aufnahmebehältnis für ein Druckmittel**

(30) Priorität: 29.06.2004 DE 102004031243
(71) Anmelder: Hehl, Karl, 72290 Lossburg (DE)
(72) Erfinder: Hehl, Karl, 72290 Lossburg (DE)
(74) Vertreter: Reinhardt, Harry

(57) **Zusammenfassung**

An einer Spritzgießmaschine zur Verarbeitung von Kunststoffen ist wenigstens eine Antriebseinheit vorgesehen, die bei Betätigung wenigstens ein passives Volumenverdrängt. Zum Ausgleich des Volumens ist ein luftdichtes Aufnahmebehältnis (13) zur Aufnahme und Rückführung des Volumens von und zur Antriebseinheit vorgesehen, so dass die Spritzgießmaschine den Anforderungen an Reinraumtechnik gerecht wird. Das Aufnahmebehältnis kann bedarfsweise auch gesondert verwendet werden.

## Beschreibung

### Gebiet der Erfindung

Die Erfindung betrifft eine Spritzgießmaschine mit wenigstens einer Antriebseinheit, die ein passives Verdrängungsvolumen verdrängt, nach dem Oberbegriff des Anspruches 1 sowie ein dafür bestimmtes Aufnahmebehältnis nach dem Oberbegriff des Anspruches 15.

### Stand der Technik

Bei Kolben-Zylinder-Systemen sind in der Regel zwischen den beiden Seiten des Kolbens Flächendifferenzen bzw. in Folge des Kolbenhubs Volumenunterschiede vorhanden, so dass je nach Bewegungsrichtung des Kolbens unterschiedliche Mengen an Medium, also z. B. Hydraulikflüssigkeit oder Luft verdrängt werden. Dies gilt z. B. auch, aber nicht nur bei einseitig beaufschlagten Kolben-Zylinder-Einheiten, bei denen z. B. aus anderen Kolben-Zylinder-Einheiten verdrängtes Hydraulikmedium auf einer Seite den Kolben beaufschlagt, der auf der anderen Seite mit der Umgebung in Verbindung steht. Ein derartiger Aufbau ist z. B. als Ausgleichszylinder an Spritzgießmaschinen bekannt, in die Hydraulikmedium bei Bewegung der Schließ-und Fahrzylinder verdrängt wird, so dass Luft aus der Kolben-Zylinder-Einheit der Ausgleichszylinder in die Umgebung verdrängt wird (vgl. z. B. DE 102 09 921 B1). Ähnliches gilt auch für andere Antriebseinheiten, vor allem wenn sie eine Linearbewegung ausüben, wie z.B. das Geradeausbewegungselement eines elektromechanischen Spindelantriebs.

Bisher erfolgt eine entsprechende Verdrängung des passiven Verdrängungsvolumens, insbesondere wenn es sich bei diesem Medium um Luft handelt, in die Umgebung. Andere Vorschläge fassen die verdrängte Luft und führen sie über eine Leitung in den Tankraum.

Aus der dem Oberbegriff der unabhängigen Ansprüche zu Grunde liegenden DE 101 54 991 A1 ist eine für eine Kunststoffformmaschine bestimmte motorische Betätigungsvorrichtung mit hydraulischer Kraftverstärkung bekannt, bei dem ein zweiter Kraftübertragungsmechanismus bedarfsweise zuschaltbar ist. Ein blasebalgartiges Reservoir ist über ein Rückschlagventil in der Verbindungsleitung zwischen erstem und zweiten Kraftübertragungsmechanismus vorgesehen, so dass Fluid der Verbindungsleitung bedarfsweise zugeführt wird, aber nicht im Reservoir zum Ausgleich insbesondere in beiden Wirkrichtungen aufgenommen werden kann.

Aus der Zeichnung zu Patent Abstracts of Japan, JP 59055727 A ist ein feststehender Raum über ein Ventil mit der passiven Luftseite einer Kolben-Zylindereinheit verbunden. Die Luftseite steht aber zudem über einen direkten Auslass mit der Umgebung in Verbindung.

### Offenbarung der Erfindung

Ausgehend von diesem Stand der Technik liegt der vorliegenden Erfindung die Aufgabe zugrunde, eine Spritzgießmaschine und ein dafür geeignetes Auffangbehältnis zu schaffen, das den Anforderungen an die Reinraumtechnik genügt.

Diese Aufgabe wird durch eine Spritzgießmaschine mit den Merkmalen des Anspruches 1 sowie ein Auffangbehältnis mit den Merkmalen des Anspruches 15 gelöst.

Anstelle einer Ableitung in den Tankraum erfolgt jetzt ein Auffangen des verdrängten Volumens in einem gesonderten, luftdichten Aufnahmebehältnis, das vorzugsweise Teil eines gegenüber der Umwelt geschlossenen Systems ist. Damit ist ein Luftausgleich oder ein Ausgleich an verdrängtem Medium auch unter Reinraumbedingungen möglich, da nicht auszuschließen ist, dass durch Leckagen von Dichtungen nicht nur Ölnebel, sonder auch kleinere Ölmengen austreten, selbst wenn eine Ableitung in den Tankraum erfolgt. Dies kann auf Grund der verwendeten Schmiermittel auch bei elektromechanischen Antrieben geschehen.

Vorzugsweise besitzt das flexible Aufnahmebehältnis ein veränderliches Volumen und besteht aus einem gummielastischen oder elastomeren Material. Damit kann das Verdrängungsvolumen in einem elastischen Behälter, der ohne Vorspannung angeordnet ist, bedarfsweise aufgenommen beziehungsweise ausgeglichen werden und anschließend der Kolben-Zylinder-Einheit oder sonstigen Antriebseinheit auch wieder zur Verfügung gestellt werden, wodurch es von dem Aufnahmebehältnis wieder abgegeben wird. Dabei ist allerdings sicher zu stellen, dass möglichst nur ein geringer Differenzdruck beim Füllen und Entleeren des Aufnahmebehältnisses entsteht, um den Einfluss auf die Werkzeugfahrkraft möglichst gering zu halten. Die Werkzeugfahrkraft als Werkzeugsicherungskraft stellt sicher, dass Objekte, die im Schließbereich des Werkzeugs vorhanden sind, wahrgenommen werden, bevor es zu Beschädigungen oder Verletzungen kommt.

Es handelt sich bei Aufnahmebehältnis und dem damit verbundenen Raum der Antriebseinheit um ein geschlossenes System, so dass ein ölfreier und partikelfreier Luftaustausch und -überschuss möglich ist, der nicht oder zumindest nicht unmittelbar in die Umgebung gelangt. Ein vorzugsweise nicht unmittelbar in der Umgebung endendes Bypasssystem kann aber dennoch zum langfristigen Luftausgleich genutzt werden. Dadurch kann sich das Aufnahmebehältnis über eine Bypassleitung allmählich entleeren und auch beim erneuten Anlaufen über diese Bypassleitung emeut Luft ansaugen. Vorzugsweise bleibt die Luft jedoch in dem im Wesentlichen geschlossenen System, das über die Bypassleitung im weitesten Sinn mit der Umgebung verbunden ist.

Für im Aufnahmebehältnis eventuell kondensierende Ölmengen wird eine Auffangvorrichtung vorgesehen, die über ein Bypasssystem z. B. mit dem Tankraum für das Hydraulikmedium in Verbindung steht. Das Aufnahmebehältnis ist so angeordnet, dass es eine entsprechende Neigung zum Ablauf von Kondensflüssigkeit aufweist, wobei dies bei verschiedenen Stellungen der Maschine gewährleistet werden muss, da insbesondere Spritzgießmaschinen sowohl im Vertikalbetrieb als auch im Horizontalbetrieb betrieben werden können. Bedarfsweise ist über den Ablauf zugleich ein atmosphärischer Druckausgleich über den Leitungsquerschnitt möglich.

Weitere Vorteile ergeben sich aus den Unteransprüchen und der folgenden Beschreibung.

### Kurzbeschreibung der Figuren

Im folgenden wird die Erfindung anhand eines in den Figuren dargestellten Ausführungsbeispiels näher erläutert. Es zeigen:
- Fig. 1: Eine teilweise geschnittene Seitenansicht einer Formschließeinheit einer Spritzgießmaschine mit entleertem Aufnahmebehältnis,
- Fig. 2: Eine Darstellung gemäß Fig. 1 mit gefülltem Aufnahmebehältnis,

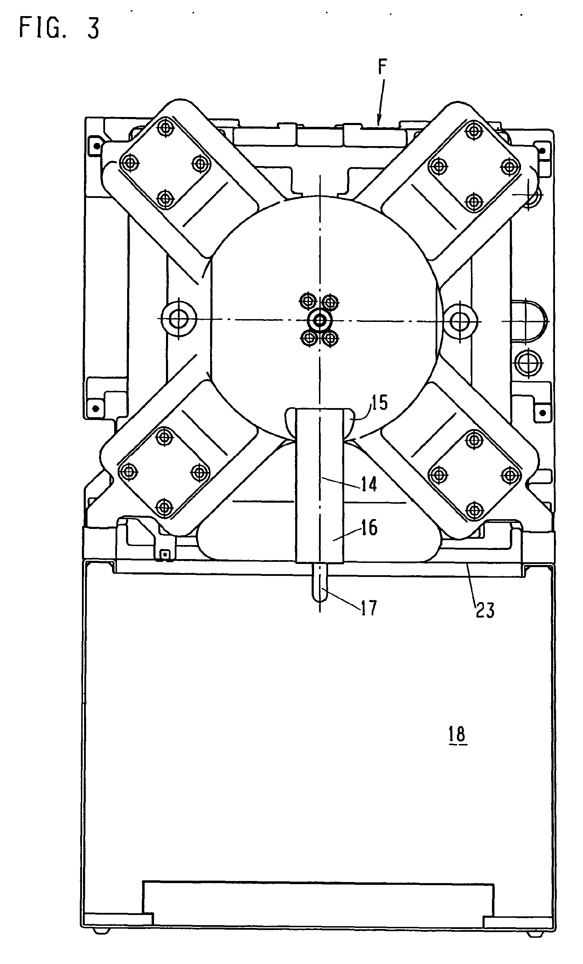

- Fig. 3: Eine Stirnansicht der Spritzgießmaschine gemäß Fig. 1.

### Beschreibung bevorzugter Ausführungsbeispiele

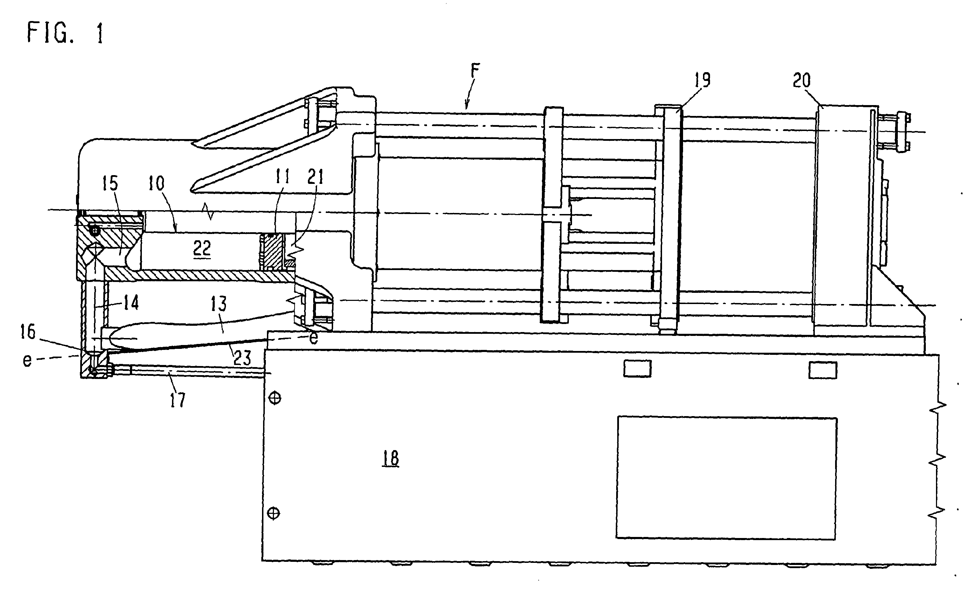

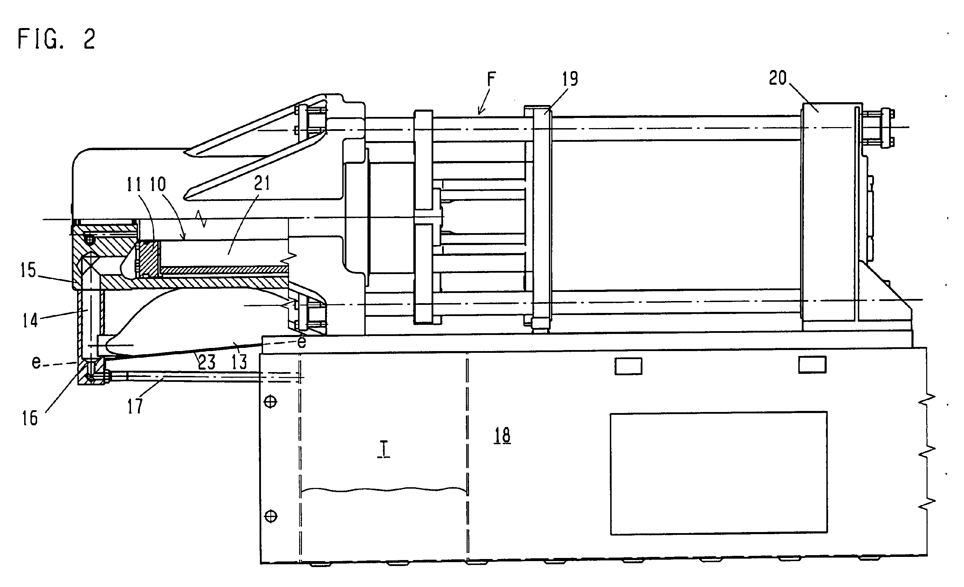

Die Figuren zeigen eine Spritzgießmaschine, die zur Verarbeitung von Kunststoffen und anderen plastifizierbarer Massen vorgesehen ist. Üblicherweise wird zwischen beweglichem Formträger 19 und stationärem Formträger 20 eine zeichnerisch nicht dargestellte Spritzgießform aufgenommen, in die von einer Spritzgießeinheit, die in den Zeichnungen nicht dargestellt ist, aber in den Fig. 1,2 rechts vom stationären Formträger angeordnet wäre, plastifiziertes Material eingespritzt wird. Die Formschließeinheit F öffnet zyklisch die Spritzgießform, um darin hergestellte Formteile auszuwerfen. Die Öffnungs- und Schließbewegung der Formschließeinheit F erfolgt im Ausführungsbeispiel über Kolben-Zylinder-Einheiten, von denen die Kolben-Zylinder-Einheit 10 in den Figuren dargestellt ist. Diese Kolben-Zylinder-Einheit 10 ist hier eine einseitig beaufschlagte Kolben-Zylinder-Einheit, das heißt der Kolben 11 wird lediglich aus dem Zylinderraum 21 beaufschlagt, wenn in diesen Raum Druckmedium, also z. B. unter Druck gesetzte Hydraulikflüssigkeit gelangt. Im Zylinderraum 22 hingegen befindet sich ein Medium, das bei der Überführung des Kolbens 11 in der Kolben-Zylinder-Einheit 10 aus der Stellung gemäß Fig. 1 in die Stellung gemäß Fig. 2 verdrängt wird.

Wenngleich sich die weiteren Ausführungen auf die Kolben-Zylinder-Einheit 10 beziehen, versteht sich von selbst, dass eine derartige Kolben-Zylinder-Einheit auch an anderen Stellen einer Spritzgießmaschine und nicht nur an der Formschließeinheit angeordnet sein kann. In Betracht kommen insofern z. B. die Antriebseinheiten der Spritzgießeinheit, des Auswerfers, der Düsenfahreinheit oder auch andere Einheiten, die im Bereich einer Spritzgießmaschine eingesetzt werden. Ebenso ist die Verwendung des Auffangbehältnisses nicht auf nur einseitig betriebene Kolben-Zylinder-Einheiten oder auf eine Hydraulikflüssigkeit als Druckmedium beschränkt. Außer den beidseitig beaufschlagbaren Kolben-Zylinder-Einheiten kommen auch andere Antriebseinheiten wie z.B. Spindel- oder Linearantriebe in Frage, die bei ihrer Bewegung Volumina verändern. Die Veränderung der Volumina kann vornehmlich in einer Verdrängung von Partikeln, Schmierstoffen oder dergleichen liegen.

Die Kolben-Zylinder-Einheit verändert bei ihrer Bewegung wenigstens ein passives Volumen eines Mediums. Von der Kolben-Zylinder-Einheit aus beschrieben, wird dieses passive Volumen verdrängt, es bildet ein Verdrängungsvolumen. Das von dem Verdrängungsvolumen umfasste Medium gelangt, wie der Vergleich zwischen Fig. 1 und 2 verdeutlicht, in ein gesondertes, luftdichtes Aufnahmebehältnis 13, das zur Aufnahme dieses Verdrängungsvolumens vorgesehen ist. Es handelt sich bei diesem Aufnahmebehältnis in Verbindung mit der Leitung 14 und dem Zylinderraum 22 der Kolben-Zylinder-Einheit um ein geschlossenes System, so dass ein ölfreier und partikelfreier Luftaustausch und -überschuss möglich ist, der nicht oder zumindest nicht unmittelbar in die Umgebung gelangt.

Das flexible Aufnahmebehältnis 13 weist ein veränderliches, also bedarfsweise ausgleichendes, Volumen insbesondere für Bewegungen der Antriebseinheit auf und ist im konkreten Ausführungsbeispiel durch einen Luftausgleichsbehälter in Form eines Luftsacks gebildet. Die im Ausführungsbeispiel verdrängte Luft wird damit beim Öffnen der Spritzgießform in das Auffangbehältnis 13 verdrängt und dort aufgenommen, kann aber bedarfsweise auch bei der Schließbewegung gemäß Fig. 1 wieder in den Zylinderraum 22 zurückgeführt werden, womit der Ausgleich bewirkt wird. Da das Auffangbehältnis 13 flexibel ist und vorzugsweise aus einem gummielastischen Material oder aus einem Elastomermaterial besteht, kann dennoch sicher gestellt werden, dass ein möglichst geringer Differenzdruck zwischen Füllen und Leeren des Luftsacks erreicht wird. Dabei ist zu bedenken, dass die Kolbenfläche eines derartigen Ausgleichszylinders, wie er im Ausführungsbeispiel dargestellt ist, bei einer 200 Tonnen Maschine etwa 1.200 cm² beträgt, so dass das Volumen mit einer beträchtlichen Kraft verdrängt wird. Dennoch sollte der Differenzdruck möglichst gering gehalten werden, um den Einfluss auf die Werkzeugsicherungskraft gering zu halten. Aus diesem Grund ist das Auffangbehältnis 13 ein elastischer Behälter, der ohne Vorspannung quasi wie ein Ballon in einen Freiraum im Nahbereich der Maschine eingelegt wird.

Vorzugsweise steht das Aufnahmebehältnis 13 über eine Leitung 14 unmittelbar mit dem Ablass 15 der Kolben-Zylinder-Einheit 10 in Verbindung. Durch die kurzen Wege wird damit sicher gestellt, dass sich kein hoher Differenzdruck z. B. durch entsprechende Leitungsquerschnitte aufbauen kann. Fig. 1 und 2 zeigen, dass dem Aufnahmebehältnis 13 eine Auffangvorrichtung 16 zugeordnet ist, die im Medium enthaltene Flüssigkeit und/oder Feststoffe auffangen soll. Die Auffangvorrichtung 16 und damit auch das Aufnahmebehältnis 13 bzw. die Leitung 14 sind so angeordnet, das im Aufnahmebehältnis 13 anfallende Flüssigkeit in Folge der Schwerkraft aus dem Aufnahmebehältnis 13 in die Auffangvorrichtung 16 gelangt. Dies ist auch sicher zu stellen, wenn sich die Formschließeinheit nicht wie in den Figuren in einer horizontalen Stellung sondern in vertikaler Stellung befindet. Um den Ablauf zu gewährleisten, ist das Aufnahmebehältnis auf einer zum Zufluss zur Auffangvorrichtung 16 geneigten Ebene e-e z. B. in Form eines Blechs 23 angeordnet.

Die Auffangvorrichtung 16 ist über eine Bypassleitung 17 mit dem Aufnahmebehältnis 13 oder der Leitung 14 verbunden. Über die Bypassleitung ist damit eine Leckölabführung z. B. zum Tankraum für das Hydraulikmedium oder zu einem gesonderten Auffangbehältnis möglich. Das Bypasssystem kann aber auch zum langfristigen Luftausgleich genutzt werden. Bleibt das System z.B. in der Stellung gemäß Fig. 1 stehen, kann sich dadurch das Auffangbehältnis über die Bypassleitung 17 allmählich entleeren und auch beim erneuten Anlaufen über diese Bypassleitung erneut Luft ansaugen. Vorzugsweise bleibt die Luft jedoch in dem im Wesentlichen geschlossenen System zwischen Zylinderraum 22 und Aufnahmebehältnis 13. Damit ist die Bypassleitung im weitesten Sinn zumindest mittelbar mit der Umgebung verbunden. Da die Bypassleitung gleichzeitig vorzugsweise einen feststehenden Querschnitt aufweist, stellt sie bereits dadurch einen gegenüber dem Ausgleichsbehälter höheren Strömungswiderstand dar, so dass es z.B. beim Verdrängen des Volumens bereits dadurch vorrangig zum Befüllen des Ausgleichsbehälters kommt, bevor Luft über die Bypassleitung abgeführt wird. Dies kann bedarfsweise durch weitere Steuerelemente wie Ventile in der Bypassleitung noch beeinflusst werden. Zum Betrieb der Maschine sind solche Ventile jedoch nicht erforderlich.

Im Ausführungsbeispiel führt die Bypassleitung 17 zum Behälter T für das Druckmedium, also zum Tankraum. Das Druckmedium ist im Ausführungsbeispiel eine Hydraulikflüssigkeit, die über Hydraulikpumpen unter Druck gesetzt wird, so dass sie im Behälter T druckfrei ist. Kondensierte Flüssigkeit kann damit über die Bypassleitung 17 wieder in den Behälter T gelangen.

Das Aufnahmebehältnis 13 ist unter der Formschließeinheit und nahe der Formschließeinheit F angeordnet, wobei es im Ausführungsbeispiel zwischen den Zylindern oder unter den Zylindern, jedoch oberhalb des Maschinenfußes 18 zu liegen kommt. Vorzugsweise ist der geeignete Ort immer in der Nähe der jeweiligen Kolben-Zylinder-Einheit, wobei vorhandene Freiräume entsprechend genutzt werden, da das Auffangbehältnis sich durch seine elastische Oberfläche auch an verschiedenste Volumenkonturen anpassen kann.

Das Aufnahmebehältnis selbst kann auch unabhängig von der Spritzgießmaschine verwendet werden und ist insofern ein Nachrüstteil, das auch an bestehenden Maschinen nachgerüstet werden kann.

### Bezugszeichenliste

- 10: Kolben-Zylinder-Einheit
- 11: Kolben
- 13: Aufnahmebehältnis
- 14: Leitung
- 15: Ablass von 10
- 16: Auffangvorrichtung
- 17: Bypassleitung
- 18: Maschinenfuss
- 19: Beweglicher Formträger
- 20: Stationärer Formträger
- 21, 22: Zylinderraum
- 23: Blech

- e-e: Ebene
- F: Formschließeinheit
- T: Behälter für Druckmedium

## Patentansprüche

1. Spritzgießmaschine zur Verarbeitung von Kunststoffen und anderen plastifizierbaren Massen mit wenigstens einer Antriebseinheit, die wenigstens einseitig so beaufschlagbar ist, dass wenigstens ein passives Volumen eines Mediums bei Betätigung von der Antriebseinheit verändert wird und in ein gesondertes , gegenüber dem Medium dichtes Aufnahmebehältnis (13) verbracht wird, **dadurch gekennzeichnet, dass** das zum Ausgleich des Volumens vorgesehene, luftdichte Aufnahmebehältnis (13) zur Aufnahme und Rückführung des Volumens von und zur Antriebseinheit vorgesehen ist.

2. Spritzgießmaschine nach Anspruch 1, **dadurch gekennzeichnet, dass** die Antriebseinheit eine Kolben-Zylinder-Einheit (10), die mit einem Druckmedium so beaufschlagbar ist, dass das passive Volumen des Mediums bei Betätigung vom Kolben (11) der Kolben-Zylinder-Einheit (10) verdrängt wird.

3. Spritzgießmaschine nach einem der vorhergehenden Ansprüche, **dadurch gekennzeichnet, dass** zumindest wenigstens ein Zylinderraum (22) der Kolben-Zylinder-Einheit (10) und das Aufnahmebehältnis (13) Teil eines im Wesentlichen geschlossenen Systems sind.

4. Spritzgießmaschine nach einem der vorhergehenden Ansprüche, **dadurch gekennzeichnet, dass** das flexible Aufnahmebehältnis (13) ein veränderliches Volumen aufweist und/oder durch einen gummielastischen Luftausgleichsbehälter gebildet ist und/oder aus Gummi und/oder einem Elastomermaterial besteht.

5. Spritzgießmaschine nach einem der vorhergehenden Ansprüche, **dadurch gekennzeichnet, dass** das Aufnahmebehältnis (13) über eine Leitung (14) unmittelbar mit dem Ablass (15) der Kolben-Zylinder-Einheit (10) verbunden ist.

6. Spritzgießmaschine nach einem der vorhergehenden Ansprüche, **dadurch gekennzeichnet, dass** dem Aufnahmebehältnis (13) eine Auffangvorrichtung (16) zugeordnet ist, die über eine Bypassleitung (17) mit dem Aufnahmebehältnis (13) oder der Leitung (14) verbunden ist.

7. Spritzgießmaschine nach Anspruch 11 oder 12, **dadurch gekennzeichnet, dass** die Auffangvorrichtung (16) so am Aufnahmebehältnis (13) oder der Leitung (14) angeordnet ist, dass im Aufnahmebehältnis (13) anfallende Flüssigkeit in Folge der Schwerkraft aus dem Aufnahmebehältnis (13) in die Auffangvorrichtung (16) gelangt.

8. Spritzgießmaschine nach einem der vorhergehenden Ansprüche, **dadurch gekennzeichnet, dass** eine Bypassleitung (17) insbesondere zum langfristigen Luftausgleich zwischen dem Aufnahmebehältnis (13) und der Umgebung vorgesehen ist.

9. Spritzgießmaschine nach Anspruch 14, **dadurch gekennzeichnet, dass** die Bypassleitung (17) mit dem Behälter (T) für das Druckmedium verbunden ist.

10. Spritzgießmaschine nach einem der vorhergehenden Ansprüche, **dadurch gekennzeichnet, dass** das Medium Luft ist und dass die gegebenenfalls im Medium enthaltene Flüssigkeit darin enthaltener Ölnebel ist.

11. Spritzgießmaschine nach einem der vorhergehenden Ansprüche, **dadurch gekennzeichnet, dass** das Aufnahmebehältnis (13) auf einer zum Zufluss zur Auffangvorrichtung (16) geneigten Ebene (e-e) angeordnet ist.

12. Spritzgießmaschine nach einem der vorhergehenden Ansprüche, **dadurch gekennzeichnet, dass** das Aufnahmebehältnis (13) so an der Spritzgießmaschine angeordnet ist, dass die Ableitung zumindest von Flüssigkeit über die Bypassleitung (17) im Horizontal- als auch Vertikalbetrieb der Maschine, insbesondere der Formschließeinheit (F) der Maschine gewährleistet ist.

13. Spritzgießmaschine nach einem der vorhergehenden Ansprüche, **dadurch gekennzeichnet, dass** die Kolben-Zylinder-Einheit (10) Teil eines Antriebs der Formschließeinheit (F) der Spritzgießmaschine ist.

14. Spritzgießmaschine nach einem der vorhergehenden Ansprüche, **dadurch gekennzeichnet, dass** das Aufnahmebehältnis (13) unter der Formschließeinheit (F) der Spritzgießmaschine oder außerhalb des bzw. auf dem Maschinenfuß (18) angeordnet ist.

15. Aufnahmebehältnis (13) zum zumindest zeitweisen Aufnehmen eines vom Kolben (11) wenigstens einer wenigstens einseitig beaufschlagbaren Antriebseinheit veränderbaren Volumens eines Mediums, insbesondere eines Verdrängungsvolumens, zur Verwendung an einer Spritzgießmaschine zur Verarbeitung von Kunststoffen und anderen plastifizierbaren Massen, wobei das gesondertes Aufnahmebehältnis (13) gegenüber dem Medium dicht ist, **dadurch gekennzeichnet, dass** das luftdichte Aufnahmebehältnis (13) mit der Antriebseinheit (10) zum Ausgleich des Volumens und zur Aufnahme und Rückführung des Volumens von und zur Antriebseinheit in Wirkverbindung steht

16. Aufnahmebehältnis nach Anspruch 23, **dadurch gekennzeichnet, dass** dem Aufnahmebehältnis (13) im Gebrauchszustand eine Bypassleitung (17) insbesondere zum bedarfsweisen Luftausgleich zwischen dem Aufnahmebehältnis (13) und der Umgebung zugeordnet ist.

17. Aufnahmebehältnis nach Anspruch 24, **dadurch gekennzeichnet, dass** die Antriebseinheit eine Kolben-Zylinder-Einheit (10) ist.

18. Aufnahmebehältnis nach Anspruch 24 oder 25, **dadurch gekennzeichnet, dass** das flexible Aufnahmebehältnis (13) ein veränderliches Volumen aufweist und/oder einen gummielastischen Luftausgleichsbehälter umfasst und/oder aus Gummi und/oder einem Elastomermaterial besteht.

19. Aufnahmebehältnis nach einem der Ansprüche 22 bis 26, **dadurch gekennzeichnet, dass** das Aufnahmebehältnis (13) über eine Leitung (14) unmittelbar mit dem Ablass (15) der Kolben-Zylinder-Einheit verbunden ist.

20. Aufnahmebehältnis nach einem der Ansprüche 22 bis 27, **dadurch gekennzeichnet, dass** dem Aufnahmebehältnis eine Auffangvorrichtung für im Medium enthaltene Flüssigkeiten und/oder Feststoffe so zugeordnet ist, dass im Aufnahmebehältnis anfallende Flüssigkeit in Folge der Schwerkraft aus dem Aufnahmebehältnis in die Auffangvorrichtung (16) gelangt.

21. Aufnahmebehältnis nach einem der Ansprüche 22 bis 28, **dadurch gekennzeichnet, dass** das Medium Luft ist, die aus der Kolben-Zylinder-Einheit verdrängt wird, und ggf. Ölnebel enthält.
